Europäisches Patentamt

European Patent Office

Office européen des brevets

(11) Veröffentlichungsnummer: **0 264 786**

**A2**

## EUROPÄISCHE PATENTANMELDUNG

(21) Anmeldenummer: 87114955.5

(22) Anmeldetag: 13.10.87

(51) Int. Cl.4: **H01G 9/02**

(30) Priorität: 23.10.86 DE 3636100

(43) Veröffentlichungstag der Anmeldung:
27.04.88 Patentblatt 88/17

(84) Benannte Vertragsstaaten:
**DE FR GB IT NL SE**

(71) Anmelder: **Roederstein Spezialfabriken für Bauelemente der Elektronik und Kondensatoren der Starkstromtechnik GmbH Ludmillastrasse 23/25 D-8300 Landshut(DE)**

(72) Erfinder: **Möhwald, Helmut, Dr. Dipl.-Chem. Sandwingert 53 D-6900 Heidelberg(DE)**
Erfinder: **Münstedt, Helmut, Dr. Dipl.-Phys. An der Altenbach 41 D-6706 Wachenheim(DE)**
Erfinder: **Feisst, Klaus Ringstrasse 14 D-7815 Kirchzarten(DE)**
Erfinder: **Baur, Ottmar Hartkirchweg 17a D-7800 Freiburg(DE)**
Erfinder: **Helwig, Gerhard, Dr. Dipl.-Phys. Steurentalstrasse 15 D-7801 Stegen(DE)**

(74) Vertreter: **Dipl.-Phys.Dr. Manitz Dipl.-Ing., Dipl.-Wirtsch. Finsterwald Dipl.-Chem.Dr. Heyn Dipl.-Phys. Rotermund Morgan, B.Sc.(Phys.) Robert-Koch-Strasse 1 D-8000 München 22(DE)**

(54) Festkörperkondensator mit einem elektrisch leitfähigen Polymeren als Bestandteil des Festelektrolyten.

(57) Festkörperkondensator mit einer positiven und einer negativen Elektrode, einem Dielektrikum und einem Festelektrolyten, wobei der Festelektrolyt als wesentlichen Bestandteil ein elektrisch leitfähiges Polymer enthält.

Abb. 1

## Festkörperkondensator mit einem elektrisch leitfähigen Polymeren als Bestandteil des Festelektrolyten

Die Erfindung betrifft einen Festkörperkondensator mit einer positiven und einer negativen Elektrode, einem Dielektrikum und einem Festelektrolyten sowie ein Verfahren zur Herstellung des Festelektrolyten in einem deerartigen Festkörperkondensator.

Elektrolytkondensatoren mit Naßelektrolyten weisen eine Reihe von Nachteilen auf, z.B. Temperaturabhängigkeit der elektrischen Werte, ungünstiges Frequenzverhalten des Scheinwiderstandes, nichtzufriedenstellendes Reststromverhalten und insbesondere ist eine Permeation zu beobachten, die die Lebensdauer des Kondensators verringert. Darüber hinaus kann bei Überlastung von Naßelektrolytkondensatoren das Lösungsmittel unkontrolliert verdampfen, was zur explosionsartigen Zerstörung des Kondensators führen kann. Zur Vermeidung dieser Nachteile wurde versucht, den Naßelektrolyten durch einen Festelektrolyten zu ersetzen. So ist beispielsweise Mangandioxid als Festelektrolyt eingesetzt worden. Mangandioxid hat jedoch negative Auswirkungen auf die häufig als Dielektrikum verwendeten Oxidschichten von Metallen, so daß eine sehr aufwendige Nachoxidation notwendig wird.

Festkörperkondensatoren, bei denen anstelle von Mangandioxid Salze von 7,7,8,8-Tetracyanochinodimethan (TCNQ) als Festelektrolyt verwendet werden, weisen eine Reihe von Vorteilen gegenüber Kondensatoren mit Naßelektrolyten auf. Bei ihrer Herstellung ergeben sich jedoch Schwierigkeiten. Üblicherweise wird das TCNQ-Salz in geschmolzenem Zustand auf die oxidierte Metalloberfläche, die als Dielektrikum dient, aufgebracht. Da TCNQ-Salze eine relativ hohe Schmelztemperatur haben und sich in geschmolzenem Zustand nach wenigen Sekungen zersetzen, wobei sie ihre Leitfähigkeit verlieren, ist ein entsprechendes Herstllungsverfahren relativ schwierig und aufwendig. Ferner sind TCNQ-Salze teuer und toxisch.

In der US-PS 4 609 671 werden Kondensatoren beschrieben, die als Festelektrolyt ein Polyacrylnitril enthalten, welches $LiClO_4$ enthält. Zwar werden derartige Systeme als elektrisch leitfähige Polymere bezeichnet, doch sind sie eigentlich nich als solche zu bezeichnen, da das Polymer selbst in derartigen Systemen zur elektrischen Leitfähigkeit nichts beiträgt.

Die in der US-PS 4 609 671 beschriebenen Kondensatoren weisen den Nachteil auf, daß das dort verwendete Polymer nur schlecht oder mit großem Aufwand in der erforderlichen Form fein verteilt werden kann, um als Festelektrolyt geeignet zu sein.

Aufgabe der vorliegenden Erfindung war es daher, einen Festkörperkondensator der eingangs genannten Art zu schaffen, der nicht nur gute elektrische Daten und eine ausreichende Lebensdauer aufweist, sondern sich auch auf einfache und preiswerte Weise herstellen läßt.

Diese Aufgabe wird durch einen Festkörperkondensator mit einer positiven und einer negativen Elektrode, einem Dielektrikum und einem Festelektrolyten gelöst, der dadurch gekennzeichnet ist, daß der Festelektrolyt als wesentlichen Bestandteil ein intrinsisch leitfähiges Polymer enthält.

Bevorzugte Ausführungsformen erfindungsgemäßer Kondensatoren sind den Unteransprüchen zu entnehmen.

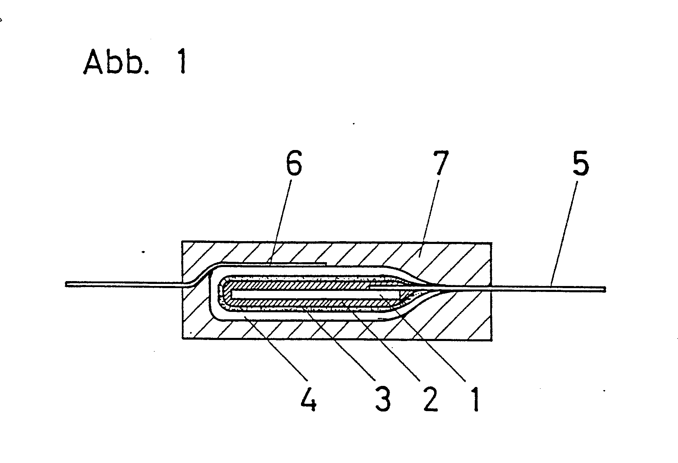

Die Zeichnung zeigt eine Ausführungsform eines erfindungsgemäßen Kondensatores im Schnitt. Ein oxidiertes Aluminiumplättchen 1 ist von einer Polypyrrolschicht 2 umgeben. Auf dieser Schicht 2 befindet sich ein Graphitüberzug 3 und darüber ein Leitsilberüberzug 4. Über den positiven bzw. negativen Anschlußstreifen 5 bzw. 6 erfolgt die Kontakiertung nach außen. Das Element ist von einem Epoxiharzgehäuse 7 umgeben.

Bei den elektrisch leitfähigen Polymeren, die in den erfindungsgemäßen Kondensatoren eingesetzt werden, handelt es sich um sogenannte intrinsisch leitfähige Polymere, d.h. Polylmere, deren Leitfähigkeit auf einer Elektronenwanderung im Polymer beruht und nicht auf der elektrischen Leitfähigkeit von Salzen. Im leitfähigen (dotierten) Zustand enthalten diese Polymeren zur Erzielung der Ladungsneutralität eingelagerte Gegenionen nur einer Ladungsart, nicht jedoch eingelagerte Salze.

Von diesen intrinsisch leitfähigen Polymeren sind Systeme zu unterscheiden, deren Leitfähigkeit auf der durch die Ionen eines Salzes hervorgerufenen Leitfähigkeit beruht und die auf bzw. in einem elektrisch nicht leitenden Polymer, welches quasi als Matrix dient, aufgebracht oder eingelagert sind. In diesen Systemen trägt das Polymer selbt zur elektrischen Leitfähigkeit nichts bei; würde man (was praktisch unmöglich ist) in derartige Polymere wie bei den intrinsisch leitfähigen Systemen nur Gegenionen einer Ladungsart einbringen, so würde überhaupt keine Leitfähigkeit resultieren. Derartige Polymer/Salz-Systeme sind eigentlich nicht als elektrisch leitfähige Polymere zu bezeichnen.

Aus diesem Grund werden im folgenden die erfindungsgemäß verwendeten intrinsisch leitfähigen Polymeren einfach als elektrisch leitfähige Polymere bezeichnet.

Als elektrisch leitfähige Polymere eignen sich grundsätzlich p-als auch n-leitende Polymere. Die elektrischen Leitfähigkeiten der Polymeren liegen im allgemeinen im Bereich von $10^{-3}$ bis zu $10^4$ S/cm, vorzugsweise im Bereich von $10^{-3}$ bis $5 \cdot 10^3$ S/cm und besonders bevorzugt im Bereich von $10^{-2}$ bis $10^3$ S/cm.

Bevorzugte elektrisch (intrinsisch) leitfähige Polymere sind dotierte (komplexierte, interkalierte) Pyrrol-, Anilin-, Furan-oder Thiophen-polymere, doch eignen sich grundsätzlich auch andere, an sich bekannte elektrische leitfähige Polymere, wie Polyacetylene und Poly-p-phenylene. Als besonders vorteilhaft haben sich p-dotierte Polymere des Pyrrols und des Anilins erwiesen.

Zu den Polymeren des Pyrrols zählen z.B. ganz allgemein Homo-und Copolymere von Pyrrol und substituierten Pyrrolen sowie Copolymere dieser Monomeren mit anderen Comonomeren. Nur beispielhaft seien als Monomere Pyrrol und an den C-Atomen Halogen-oder $C_1$-$C_8$-Alkyl-oder Alkoxy-substituierte Pyrrole sowie als Comonomere Cylcopentadien, Acetylen, Imidazol, Thiazol, Furan, Thiophen und Pyrazin genannt, wie sie z.B. in der EP-A 36 118 beschrieben werden.

Vorzugseweise enthalten derartige Pyrrolpolymere 50 bis 99 Gew.% Pyrrol und 1 bis 50 Gew.% substituierte Pyrrole und/oder andere Comonomere.

Die zweite Gruppe von besonders bevorzugten Polymeren sind Polymere des Anilins, d.h. Homopolymere von Anilin oder substituierten Anilinderivaten oder Copolymere dieser Monomeren mit anderen Monomeren. Derartige Polymere sowie ihre Eigenschaften sind an sich bekannt und z.B. E.M. Genies et al, Mol. Cryst. Liq. Cryst. (1985), Vol. 121, S. 181-186, A.G. McDiarmid et al, l.c. Vol. 121, S. 173-180 beschrieben.

Gemäß einer bevorzugten Ausführungsform enthalten die erfindungsgemäßen Kondensatoren eine metallische positive Elektrode und eine darauf befindliche Oxidschicht als Dielektrikum.

So können die erfindungsgemäßen Kondensatoren z.B. die Form eines Wickelkondensators mit einer Metallfolie, insbesondere einer Aluminiumfolie als positiven Elektrode und einer sich darauf befindenden Oxidschicht als Dielektrikum haben. Zwischen dieser mit einer dielektrischen Oxidschicht versehenen Metallfolie und einer weiteren Metallfolie, die als negativ Elektrode dient, ist mindestens eine mit dem leitfähigen Polymer beschichtete Trennfolie, vorzugsweise aus karbonisiertem Papier angeordnet.

Weiterhin sind die erfindungsgemäßen Kondensatoren auch in Form sogenannter Chip-Kondensatoren herstellbar.

Dabei wird auf einem Metallplättchen, vorzugsweise aus Aluminium oder einem metallischen Sinterkörper, vorzugsweise einem Tantalsinterkörper, eine Oxidschicht als Dielektrikum aufgebracht. Auf der dielektrischen Oxidschicht dieses Metallplättchens oder metallischen Sinterkörpers ist eine Schicht aus elektrisch leitfähigen Polymeren aufgetragen. Die Dicke dieser Schicht liegt im allgemeinen im Bereich von $10^{-2}$ bis 200 $\mu$m, vorzugsweise von 0,1 bis 150 $\mu$m und insbesondere von 1 bis 100 $\mu$m. In einigen Fällen haben sich Schichtdicken von 10 bis 100, insbesondere von 20 bis 100 $\mu$m als vorteilhaft erwiesen.

Unabhängig vom speziellen Aufbau des Kondensators hat es sich allgemein herausgestellt, daß es von Vorteil ist, die Kondensatorelemente mit einer versiegelnden Hülle zu versehen. Dies hat hauptsächlich den Zweck, das Eindringen von Luftfeuchtigkeit und Sauerstoff auszuschließen, welche negative Einflüsse auf die elektrisch leitfähigen Polymeren und den Kondensator als solchen haben können.

Das erfindungsgemäße Verfahren zur Herstellung von Festkörperkondensatoren gemäß den Ansprüchen 1 - 11 oder deren Bauelementen ist dadurch gekennzeichnet, daß man die Elektrodenmaterialien, das Dielektrikum und/oder eine Trennfolie mit Monomeren, die ein elektrisch leitfähiges Polymer zu bilden vermögen, und einem Oxidationsmittel beschichtet und die Monomeren dadurch polymerisiert.

Bei der Polymerisation aus flüssiger Phase wird vorteilhaft im Anschluß an die Polymerisation das Lösungsmittel verdampft.

Gemäß einer bevorzugten Ausführugnsform des Verfahrens, welches zur Herstellung des Festelektrolyten in Kondensatoren gemäß den Ansprüchen 5 und 6 eingesetzt werden kann, wird das elektrisch leitfähige Polymer in Gegenwart einer Folie aus karbonisierbaren oder karbonisiertem Papier hergestellt. Dies kann z.B. derart erfolgen, daß ein herkömmlicher, trockener Kondensatorwickel mit einer Papierdicke von vorzugsweise 30 bis 50 $\mu$m über einen Zeitraum von 20 bis 30 Stunden einer Temperatur von 300 °C ausgesetzt wird, wobei das die Trennfolie bildende karbonisierbare Papier karbonisiert wird. Dadurch wird zum einen der elektrische Widerstand des Kondensatorpapiers erniedrigt und zum anderen das Einbringen einer Polymerschicht zwischen die beiden Metallfolien erleichtert.

Anschließend kann dann das in einem geeigneten Lösungsmittel gelöste Monomer aufgebracht werden, beispielsweise indem man das Wickelelement in die entsprechende Lösung eintaucht. Die Aufbringung des Oxidationsmittels kann auf ähnliche Weise erfolgen, es ist jedoch auch ausreichend, auf die Stirnfläche des Wickels eine Lösung eines geeigneten Oxidationsmittels aufzubringen, welche anschließend in das Innere des Wickels diffundiert.

Nach erfolgter Polymerisation und gegebenenfalls Trocknung, d.h. Entfernung des Lösungsmittels, kann das Kondensatorelement mit einer versiegelnden Hülle ausgestattet werden. Dazu führt man es beispielsweise in einen Aluminiumbecher ein und umhüllt es mit Epoxidharz.

In einer Abwandlung des vorstehend beschriebenen Verfahrens ist es grundsätzlich auch möglich, das elektrisch leitfähige Polymer vor der Karbonisierung des Papiers aufzubringen und anschließend die Karbonisierung von Papier mit darauf aufgebrachtem elektrisch leitfähigem Polymer durchzuführen.

Gemäß einer weiteren Ausführungsform des erfindungsgemäßen Verfahrens wird das elektrisch leitfähige Polymer, welches den wesentlichen Bestandteil des Festelektrolyten bildet, auf einer als Dielektrikum dienenden Oxidschicht eines erfindungsgemäßen Kondensators aufgebracht.

Dies kann ganz allgemein dadurch erfolgen, daß die oxidierte Oberfläche mit dem Monomer und einem geeigneten Oxidationsmittel in Kontakt gebracht wird. Auch in diesem Fall ist es vorteilhaft, bei Durchführung der Polymerisation in flüssiger Phase das Lösungsmittel nach erfolgter Polymerisation zu verdampfen, z.B. durch Vakuumtrocknung.

Abhängig von der gewünschten Schichtdicke des leitfähigen Polymers auf der Oxidschicht kann der Beschichtungsprozeß gegebenenfalls mehrmals wiederholt werden. Anschließend kann als kathodische Verbindung auf die Schicht aus elektrisch leitfähigen Polymeren ein Graphit-und/oder ein Leitsilberüberzug aufgebracht werden.

Auch in diesem Fall ist es von Vorteil, das Kondensatorelement nach erfolgter Aufbringung des elektrisch leitfähigen Polymeren zu versiegeln, um Einwirkungen von Luftfeuchtigkeit und Sauerstoff weitgehend auszuschließen. Zu diesem Zweck können beispielsweise Gehäuse aus im wesentlichen gasundurchlässigen Kunststoffen verwendet werden.

Als Oxidationsmittel für die Herstellung der elektrisch leitfähigen Polymeren verwendet man vorteilhaft Sauerstoff enthaltende Oxidationsmittel, die, bezogen auf 1 mol der zu polymerisierenden Verbindung, im allgemeinen in Mengen von 0,1 bis 2 mol Verwendung finden können. Größere Mengen an Oxidationsmittel sind nicht erforderlich und auch nicht vorteilhaft, da zum einen die vorstehend genannte Menge in der Regel ausreicht, die gesamten Monomeren in Polymere umzuwandeln und zum anderen ein zu großer Überschuß an Oxidationsmittel zu einer ungleichmäßigen Polymerisation führen kann.

Von den Oxidationsmitteln haben sich insbesondere Peroxosäuren und deren Salze, wie die Peroxodischwefelsäure und deren Alkali-und Ammoniumsalze bewährt. Vorzugsweise werden auch Peroxoborate, Perchlorate oder Peroxochromate, wie Natriumperborat, Kaliumdichromat oder Eisenperchlorat und Kupferperchlorat, verwendet. Außerdem sind auch Permanganate, wie Kaliumpermanganat geeignet, wenn man diesen geringe Mengen Säuren zusetzt. Auch Wasserstoffperoxid kann als Oxidationsmittel verwendet werden, wobei hier in der Regel die Anwesenheit von Leitsalzen sehr vorteilhaft ist. Weitere geeignete Oxidationsmittel sind starke Lewis-Säuren wie $FeCl_3$, $AsF_5$ und $SbF_5$.

Bei der Verwendung von Oxidationsmitteln, deren reduzierte Formen gleichzeitig als Gegenionen im elektrisch leitfähigen Polymer geeignet sind, erübrigt sich die Anwesenheit von Leitsalzen (häufig auch als Komplexierungsmittel oder Dotierungsmittel bezeichnet). Es ist jedoch auch möglich, andere Oxidationsmittel zu verwenden und die Polymerisation in Gegenwart von derartigen Leitsalzen durchzuführen. Als Beispiele für Leitsalze seien $KHSO_4$, $Na_2SO_4$, $HCOOH$, $LiClO_4$, $HClO_4$, $NEtClO_4$, $NBu_4ClO_4$, $KAlF_3$, $NaAlF_6$, $KBF_4$, $K_2ZrF_6$, $H_2SO_4$, $NOPF_6$, $KAsF_6$ und $NaPF_6$ genannt. Die Konzentration dieser Leitsalze ist vorteilhaft so bemessen, daß auf 3 mol der eingesetzten Monomeren mindestens 1 mol dieser Leitsalze verwendet werden.

Vorstehend wurden Verfahren beschrieben, in denen die Herstellung des elektrisch leitfähigen Polymeren aus flüssiger Phase durchgeführt wird. Als Lösungsmittel haben sich dabei Wasser, gegebenenfalls in Abmischung mit organischen, mit Wasser mischbaren Lösungsmitteln bewährt. Andereseits können auch organische Lösungsmittel, wie Dimethylsulfoxid, Methanol, Acetonitril, Ethylencarbonat, Propylencarbonat, Dioxan, Dimethoxyethan, Dimethylsulfit oder Tetrahydrofuran sowie deren Mischungen eingesetzt werden, solange gewährleistet ist, daß eine entsprechende Menge Oxidationsmittel, welche zur Polymerisation der Monomeren ausreicht, in diesen Lösungsmitteln vorhanden ist.

Die Konzentration der Monomeren in diesen Lösungsmitteln liegt im allgemeinen im Bereich von $10^{-5}$ bis $10^{-1}$, vorzugsweise von $5 \bullet 10^{-4}$ bis $10^{-2}$ und die Konzentration der Oxidationsmittel wird entsprechend nach den vorstehenden Kriterien bemessen.

Als besonders bevorzugt für die Polymerisation aus flüssiger Phase haben sich Wasser/Methanolmischungen als Lösungsmittel und Natriumperoxodisulfat als Oxidationsmittel herausgestellt.

Vorstehend wurde die Herstellung der elektrisch leitfähigen Polymeren, die den wesentlichen Bestandteil des Festelektrolyten bilden, durch Polylmerisation in flüssiger Phase beschrieben. Grundsätzlich ist es jedoch auch möglich, aus der Gasphase zu polymerisieren, d.h. Monomer und Oxidationsmittel über die Gasphase auf den entsprechenden Träger aufzubringen. Es ist möglich, sowohl Monomere als auch Oxidationsmittel über die Gasphase aufzubringen; es kann jedoch auch nur Monomer oder Oxidationsmittel in dieser Weise aufgebracht werden. Falls beide Komponenten über die Gasphase aufgebracht werden, ist es in der Regel vorteilhaft, wenn auch nicht unbedingt erforderlich, dieses in zeitlichem Abstand durchzuführen.

Beispiel

Es wurde eine Lösung A aus 5 Vol% Pyrrol und 95 Vol% Methanol hergestellt.

Zur Herstellung der Lösung B wurden 0,5 g Natriumperoxodisulfat ($Na_2S_2O_8$) in 3 ml Wasser und 7 ml Methanol gelöst.

Ein Aluminiumplättchen der Größe 4 × 4 mm mit angeschweißten Kontaktstreifen wrude nach einem an sich bekannten Verfahren elektrochemisch oxidiert entsprechend der Anodenfolie eines 40 V-Kondensators. Auf das so vorbereitete Metallplättchen wurde jeweils ein Tropfen der beiden Lösungen A und B gegeben. Nach etwa 10 Minuten war die Polymerisation abgeschlossen und das Lösungsmittel wurde verdampft.

Dieser Beschichtungsprozeß wurde insgesamt 3mal durchgeführt, wobei eine 30 bis 40 $\mu$m dicke Polypyrrolschicht mit einer Leitfähigkeit von etwa 0,2 S/cm erhalten wurde.

Nach einer abschließenden Vakuumtrocknung bei 20°C wurde die Polypyrrolschicht mit einem Graphit-und Leitsilberüberzug und einem Anschlußstreifen versehen. Das erhaltene Kondensatorelement wurde anschließend mit einem Epoxiharzüberzug versiegelt (der Aufbau dieses Kondensators entspricht dem in der Figur gezeigten).

Der Festkörperkondensator hatte eine Kapazität von 2,0 $\mu$F und einen Verlustfaktor von 0,06 bei 100 Hz und 20°C. Der Reststrom nach einer Minute bei einer Spannung von 10 V betrug 1,3 $\mu$A. Ein Elektrolytkondensator vergleichbarer Geometrie mit flüssigen Elektrolyten besaß bei gleichen Meßbedingungen eine Kapazität von 2,0 $\mu$F, eine Verlustfaktor von 0,107 und einen Reststrom von 0,8 $\mu$A.

**Ansprüche**

1. Festkörperkondensator mit einer positiven und einer negativen Elektrode, einem Dielektrikum und einem Festelektrolyten, dadurch gekennzeichnet, daß der Festelektrolyt als wesentlichen Bestandteil ein intrinsisch leitfähiges Polymer enthält.

2. Festkörperkondensator nach Anspruch 1, dadurch gekennzeichnet, daß das leitfähige Polymer ein p-oder n-leitendes Polymer mit einer elektrischen Leitfähigkeit im Bereich von $10^{-3}$ bis $5 \bullet 10^{+3}$ S/cm ist.

3. Festkörperkondensator nach den Ansprüchen 1 und 2, dadurch gekennzeichnet, daß das intrinsisch leitfähige Polymer ein Pyrrol-, Furan-, Thiophen-oder Anilinpolymer ist.

4. Festkörperkondensator nach den Ansprüchen 1 bis 3, gekennzeichnet durch eine metallische positive Elektrode und einer darauf befindlichen Oxidschicht als Dielektrikum.

5. Festkörperkondensator in Form eines Wickelkondensators nach den Ansprüchen 1 bis 4, gekennzeichnet durch eine Metallfolie als positive Elektrode mit einer auf dieser Metallfolie befindlichen dielektrischen Oxidschicht, einer Metallfolie als negative Elektrode und mindestens eine zwischen beiden Metallfolien angeordnete und mit dem leitfähigen Polymer beschichtete Trennfolie.

6. Festkörperkondensator nach Anspruch 5, dadurch gekennzeichnet, daß die mit dem leitfähigen Polymer beschichtete Trennfolie aus karbonisiertem Papier besteht.

7. Festkörperkondensator nach den Ansprüchen 1 bis 4, gekennzeichnet durch ein Metallplättchen oder einen metallischen Sinterkörper als positive Elektrode, eine auf dem Metallplättchen oder dem metallischen Sinterkörper befindliche dielektrische Oxidschicht, eine auf der Oxidschicht aufgebrachte Schicht aus intrinsisch leitfähigen Polymeren und einen auf der leitfähigen Polymerschicht befindlichen Graphit-und/oder Leitsilberüberzug.

8. Festkörperkondensator nach Anspruch 7, dadurch gekennzeichnet, daß die Schicht aus intrinsisch leitfähigen Polymeren eine Dicke im Bereich von 0,1 bis 150 $\mu$m aufweist.

9. Festkörperkondensator nach einem der Ansprüche 5 bis 8, dadurch gekennzeichnet, daß die Metallfolie bzw. das Metallplättchen aus Aluminium besteht.

10. Festkörperkondensator nach den Ansprüchen 7 und 8, dadurch gekennzeichnet, daß der metallische Sinterkörper ein Tantalsinterkörper ist.

11. Festkörperkondensator nach einem der Ansprüche 1 bis 10, gekennzeichnet durch eine die Kondensatorelemente versiegelnde Hülle.

12. Verfahren zur Herstellung von Festkörperkondensatoren gemäß den Ansprüchen 1 bis 11 und/oder deren Bauelementen, dadurch gekennzeichnet, daß man die Elektrodenmaterialien, das Dielektrikum und/oder eine Trennfolie mit Monomeren, die ein intrinsisch leitfähiges Polymer zu bilden vermögen, und einem Oxidationsmittel beschichtet und die Monomeren dadurch polymerisiert.

13. Verfahren nach Anspruch 12, dadurch gekennzeichnet, daß man nach erfolgter Polymerisation aus flüssiger Phase das Lösungsmittel verdampft.

14. Verfahren nach den Ansprüchen 12 und 13, dadurch gekennzeichnet, daß man die Monomeren und das Oxidationsmittel auf eine Folie aus karbonisierbarem Papier in einen Kondensator gemäß den Ansprüchen 5 und 6 aufbringt.

15. Verfahren nach den Ansprüchen 12 und 13, dadurch gekennzeichnet, daß man die Monomeren und das Oxidationsmittel auf eine als Dielektrikum dienende Oxidschicht eines Kondensators gemäß den Ansprüchen 2 bis 11 aufbringt.

Abb. 1